# EUROPEAN PATENT APPLICATION

(11) **EP 1 705 909 A2**
(43) Date of publication of application: **27.09.2006**
(21) Application number: 06251545.7
(22) Date of filing: 23.03.2006
(51) Int. Cl.: H04N 5/765

(54) **Recording and reproducing device provided with programmed transfer function**

(30) Priority: 25.03.2005 JP 2005088289
(71) Applicant: ORION ELECTRIC CO., Ltd., Takefu-City, Fukui 915-8555 (JP)
(72) Inventor: Nakakura, Toshihiro c/o Intellectual Property Dept, Echizen-city Fukui 915-8555 (JP)
(74) Representative: Paget, Hugh Charles Edward

(57) **Abstract**

A recording and reproducing device 1 and a portable type reproducing device 4 are connected by communication means 8, a transfer start time and a transfer end time are set, a time required for the transfer is calculated from an amount of data to be transferred out of recorded data stored in storage means 2 for which it has been predetermined at the time of recording whether or not to perform a transfer to the portable type reproducing device 4 and a transfer rate, and when the transfer can be judged not to complete by the transfer end time, the user is warned thereof. When the transfer can be judged to complete, a transfer of the recorded data to the portable type reproducing device 4 is started at the transfer start time and the recorded data is stored in storage means 6.

## Description

### BACKGROUND OF THE INVENTION

### Field of the Invention

The present invention relates to a recording and reproducing device provided with a programmed transfer function having the function of transferring recorded data transferred from a recording and reproducing device which can store the recorded data to a portable type reproducing device, and more particularly, to a recording and reproducing device provided with a programmed transfer function which can program a time for transferring recorded data.

### Description of the Related Art

Conventionally, a recording and reproducing device which can store recorded data such as HDD (hard disk drive) has the function of transferring recorded data to a portable type reproducing device. There is a demand for minimizing the size of the portable type reproducing device from the standpoint of its mode of use, and from this standpoint, the portable type reproducing device has a smaller recording capacity for storing video data than a stationary type and has a smaller number of display pixels than a stationary type display device, and in this way the portable type reproducing device is often more functionally limited than the stationary type reproducing device.

Thus, since the portable type reproducing device is more limited in the storage capacity and the number of display pixels than the stationary type, Japanese Patent Laid-Open Publication No. 2004-260838 (Patent Document 1), for example, discloses a method of performing recording using a recording and reproducing device according to two systems simultaneously; high image quality format for reproduction using the recording and reproducing device and a high compression rate format for reproduction using the portable type reproducing device, reducing a time for compression and thereby transferring recorded data in a high compression rate format in a short time by means of a memory card provided for the portable type reproducing device.

On the other hand, Japanese Patent Laid-Open Publication No. 2004-310885 (Patent Document 2) discloses a method of transferring video data recorded by a recording and reproducing device which can store recorded data to the portable type reproducing device by compressing the recorded data to be transferred in a high compression rate format and completing the transfer before a preset transfer completion time elapses. This method compresses recorded data at the time of transfer, and can thereby compress stored data. Furthermore, by setting the transfer completion time, it is possible to clearly specify the time during which the user can take out the portable type reproducing device.

However, when a transfer of recorded data is automatically started with a conventional recording and reproducing system, the recorded data to be transferred is large and the transfer may not be completed within a scheduled transfer time, resulting in such a disadvantage that the transfer of desired recorded data is not completed by a desired time.

### SUMMARY OF THE INVENTION

The present invention is implemented in view of the above described problem and it is an object of the present invention to provide a recording and reproducing device provided with a programmed transfer function which has the function of presetting whether or not to transfer recorded data of a broadcast program to a portable type reproducing device when recording of the broadcast program is set or programmed recording is set, presetting a transfer start time so that the transfer of desired recorded data is started at a predetermined time, presetting a transfer end time and warning the user when the transfer is judged not to be completed within the set time.

The recording and reproducing device provided with a programmed transfer function according to a first aspect of the present invention comprises recording and reproducing means for recording and reproducing video data (optionally, with selection of a high image quality recording format or a high compression rate recording format), storage means for storing the video data (with as an optional feature recording format selecting means for selecting any one of the high image quality recording format and the high compression rate recording format at the time of recording or at the time of programming the recording), data transfer means and communication means for transferring the video data recorded to the portable type reproducing device and transfer judging means which is a transfer flag for setting whether or not to transfer video data to the portable type reproducing device provided with video data reproducing means during recording, wherein the recording and reproducing device sets a transfer start time and a transfer end time, compares an estimated transfer time calculated from the amount of data of the video data and transfer rate per a unit time with a programmed transfer time calculated from the transfer start time and the transfer end time and comprises warning means for reporting when the estimated transfer time exceeds the programmed transfer time.

According to the construction of the first aspect of the present invention, a transfer start time and transfer end time are set and when all the recorded data whose transfer is indicated by the transfer flag is judged not to end within the time, the user can be warned thereof. Whether or not the transfer ends by the transfer end time is judged by calculating an estimated transfer time from the amount of recorded data and a transfer rate indicating the amount of transfer per a unit time when a transfer is performed between the recording and reproducing device and the portable type reproducing device, calculating a programmed transfer time from the set transfer start time and transfer end time, comparing the estimated transfer time with the programmed transfer time, thereby judging whether or not the transfer of the recorded data ends by the set transfer end time, and when the transfer is judged not to end, the user is warned thereof, and it is possible to thereby prevent a situation that the transfer has not ended after the transfer end time is past.

The recording and reproducing device provided with a programmed transfer function according to a second aspect of the present invention is the recording and reproducing device provided with a programmed transfer function according to the first aspect of the present invention, wherein the portable type reproducing device comprises feedback means capable of storing setting information on the recording and reproducing device and reflecting the setting information including a change thereof in the setting of the recording and reproducing device.

According to the construction of the second aspect of the present invention, the recording and reproducing device provided with a programmed transfer function according to the first aspect of the present invention can change the setting of the recording and reproducing device by the portable type reproducing device, cause the change contents to be fed back during the transfer of the recorded data and reflected in the setting of the recording and reproducing device.

The recording/reproducing system according to the first aspect of the present invention sets a transfer start time and transfer end time, calculates an estimated transfer time and programmed transfer time based on the transfer start time and transfer end time, the amount of all the recorded data whose transfer is indicated by a transfer flag and the transfer rate, and when the estimated transfer time exceeds the programmed transfer time, that is, when the transfer of the recorded data is estimated not to end by the set transfer end time, the recording/reproducing system warns the user thereof, causes the user to reset the transfer start time and transfer end time, and can thereby prevent a situation that the transfer has not ended even after the transfer end time is past and allow the user to carry the portable type reproducing device at a desired time.

The recording/reproducing system according to the second aspect of the present invention edits the setting information of the recording and reproducing device by the portable type reproducing device and is provided with means for feeding back the edited setting information, and therefore when, for example, the recording and reproducing device edits data instructed to be deleted from the recorded data which has already been viewed by the portable type reproducing device and reports the editing to the recording and reproducing device, and can thereby delete the data already viewed without the need to confirm the recorded data by operating the recording and reproducing device. Moreover, by recording program information of a broadcast program and feeding back the program information, it is possible to program the recording of the broadcast program without operating the recording and reproducing device.

### BRIEF DESCRIPTION OF THE DRAWINGS

FIG. 1 is a block diagram showing the configuration of an embodiment of the present invention.
FIG. 2 is a flowchart showing an operation when transferring recorded data according to the embodiment of the present invention.
FIG. 3 is a flowchart showing a feedback operation of information from the portable type reproducing device to the recording and reproducing device according to the embodiment of the present invention.

### DETAILED DESCRIPTION OF THE PREFERRED EMBODIMENTS

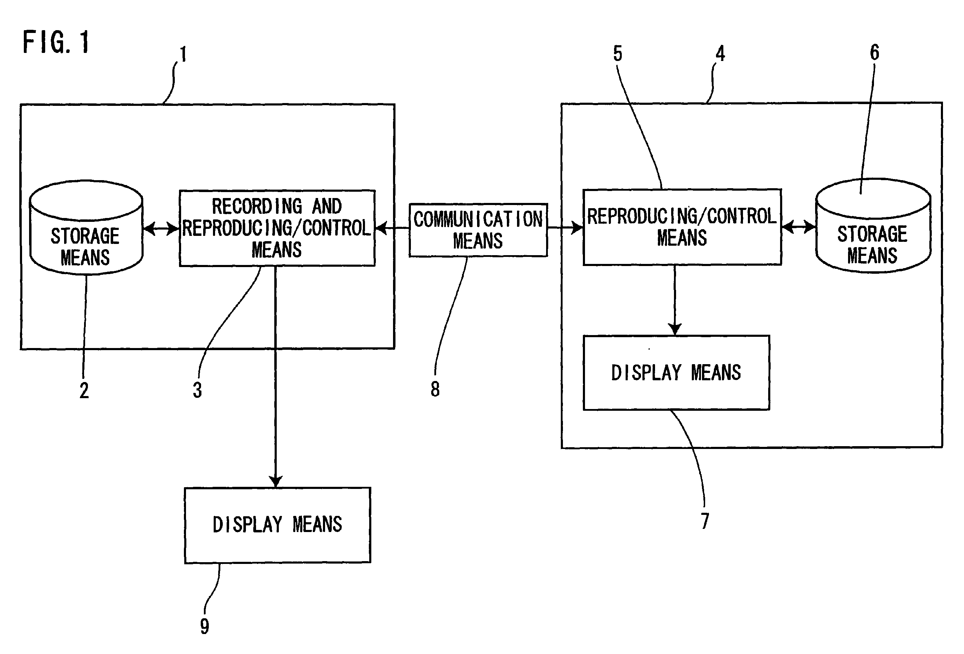

Hereinafter, an embodiment as the best mode for implementing the present invention will be explained with reference to FIG. 1 to FIG. 3. It goes without saying that the present invention is also easily applicable to modes other than that explained in the embodiment within a range without departing from the essence of the present invention.

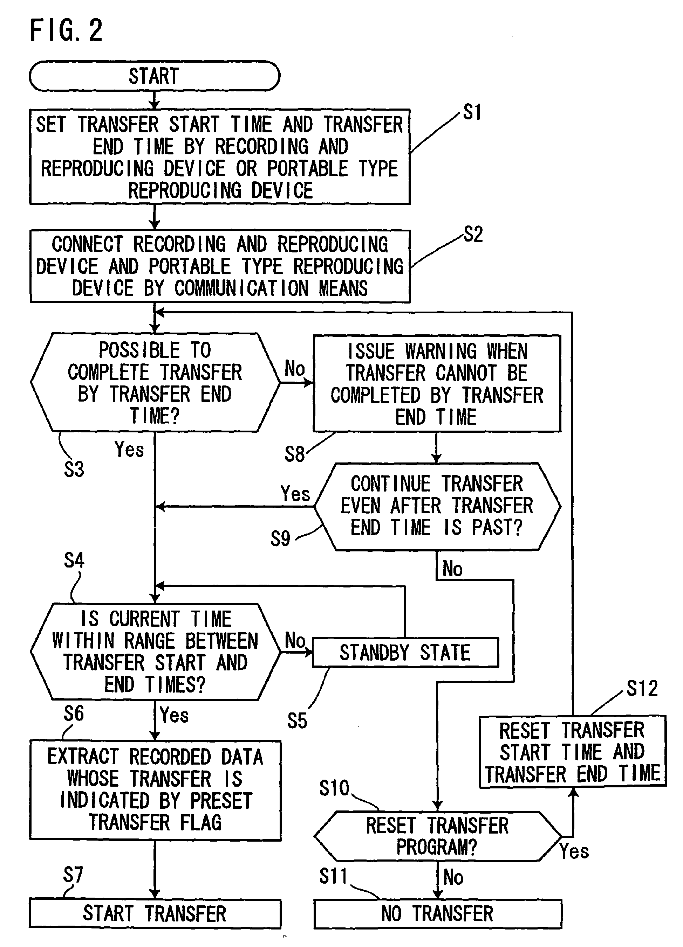

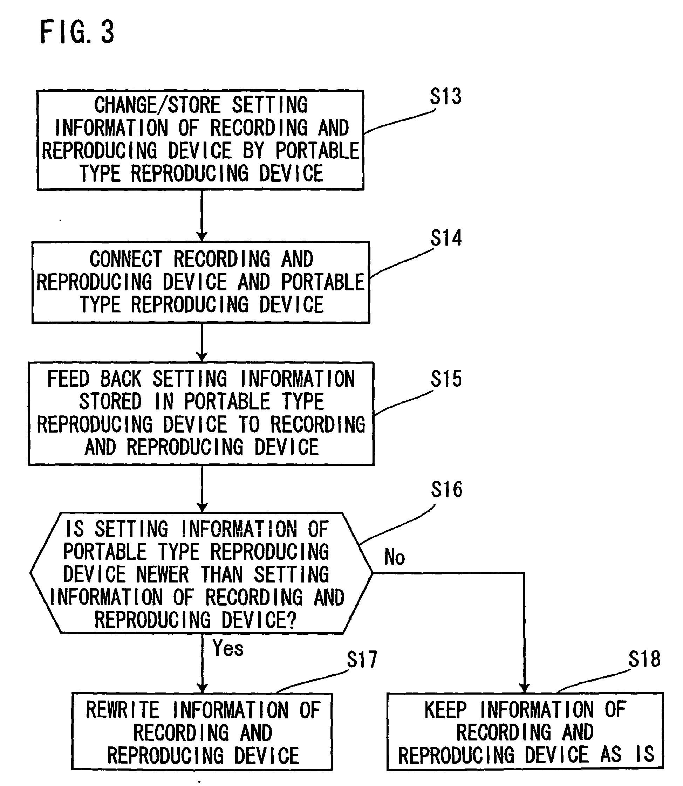

FIG. 1 to FIG. 3 show an embodiment of the present invention. FIG. 1 is a block diagram showing the configuration of an embodiment. FIG. 2 is a flowchart showing the operation of the whole construction when a transfer is programmed. FIG. 3 is a flowchart showing the operation when setting information of a recording and reproducing device changed by a portable type reproducing device is fed back to the recording and reproducing device.

The configuration of the embodiment of the present invention will be explained using FIG. 1. Reference numeral 1 denotes a recording and reproducing device such as an HDD, which is provided with storage means 2 for saving or storing recorded data or the like and control means 3 for controlling recording, reproduction, programming or the like. Reference numeral 4 denotes a portable type reproducing device, which is provided with storage means 6 for saving or storing recorded data, control means 5 for controlling reproduction of the recorded data and various settings or the like and display means 7 for displaying reproduced recorded data. The recording and reproducing device 1 and portable type reproducing device 4 transfer recorded data or the like using communication means 8. The recording and reproducing device 1 is provided with reception means (not shown) for receiving a video signal using a carrier or cable and signal output means (not shown) for sending a video signal such as recorded data to display means which is an external display device. The communication means 8 may be a wired connection, connection using wireless communication or connection via a separate storage medium (not shown).

Next, the operation when transferring recorded data stored in the recording and reproducing device 1 to the portable type reproducing device 4 will be explained with reference to the flowchart in FIG. 2. A transfer start time and a transfer end time are set by the recording and reproducing device 1 or portable type reproducing device 4 (S1). The recording and reproducing device 1 and the portable type reproducing device 4 are connected by the communication means 8 (S2). Whether a transfer completes at the transfer end time or not is calculated and judged from the transfer start time and transfer end time set in S1 and the amount of the recorded data and the transfer rate (S3). As a result, when the transfer is judged to complete by the transfer end time, the apparatus waits until the transfer start time (S4, 5). When the transfer start time comes, a transfer of recorded data whose transfer is instructed by a transfer flag set at the time of recording or at the time of programming is started (S6). When the transfer is judged not to end within the transfer end time in step S3, the user is warned that the transfer cannot be completed within the transfer time by means of a display of characters, designed symbols or reporting with voice (S8). Next, the user is requested to select whether or not to transfer the recorded data even after the set transfer time is past (S9) and the process moves to step S4 when the data is transferred or the process moves to step S10 when the data is not transferred. When the data is not transferred, the user is requested to select whether or not to reset the recorded data which is a transfer candidate (S10). When the recorded data is not reset, the operation ends at this point (S11) and when the recorded data is reset, the transfer start time and the transfer end time are reset (S12) and the operation is returned to step S3.

Next, the operation of feeding back the setting information specified by the portable type reproducing device 4 to the recording and reproducing device 1 will be explained. FIG. 3 is a flowchart showing the feedback operation. The recording and reproducing device 1 is set by the portable type reproducing device 4 (S13). Next, the portable type reproducing device 4 and the recording and reproducing device 1 are enabled to communicate with each other via the communication means 8 (S14). Next, the setting information of the recording and reproducing device 1 stored in the portable type reproducing device 4 is fed back to the recording and reproducing device 1 (S15). This setting information is compared with the information stored in the recording and reproducing device 1 (S16), and when there is a change, the setting information is rewritten with the setting information of the portable type reproducing device 4 (S17) and when there is no change, the setting information of the recording and reproducing device 1 is kept (S18).

As described above, in this embodiment, when recorded data is transferred from the recording and reproducing device 1 to the portable type reproducing device 4, a transfer flag indicating whether or not to transfer the data at the time of recording video data or at the time of programming the recording is set, a desired transfer start time and transfer end time for transferring the recorded data are set, and when the recording and reproducing device 1 and the portable type reproducing device 4 are connected, it is judged whether or not the transfer ends by the transfer end time based on the transfer start time and the transfer end time, the amount of recorded data and the transfer rate of the transfer target, and when the transfer is judged not to end, the user can be warned thereof, and when the transfer is judged to end, a standby state is set until the transfer start time. When the transfer does not end by the transfer end time, the user is warned thereof, the transfer start time and the transfer end time are reset and the transfer target is reset, and it is possible to thereby prevent a situation that the transfer of the recorded data does not end by the transfer end time.

Furthermore, the portable type reproducing device 4 sets the recording and reproducing device 1 and when, for example, the user acquires information on a program to be recorded when leaving home, the user makes a reservation using the portable type reproducing device 4 and causes the information to be fed back to the recording and reproducing device 1, which eliminates the necessity for making a reservation using the recording and reproducing device 1 after getting home. Furthermore, the recorded data already viewed using the portable type reproducing device 4 is marked to indicate that it has already been viewed, and when the portable type reproducing device 4 is connected to the recording and reproducing device 1, it is possible to automatically delete the recorded data stored in the recording and reproducing device 1 which has already been viewed using the portable type reproducing device 4.

## Claims

1. A recording and reproducing device provided with a programmed transfer function, comprising:
recording and reproducing means for recording and reproducing video data in a high image quality recording format and high compression rate recording format;
storage means for storing the video data;
recording format selecting means for selecting any one of the high image quality recording format and the high compression rate recording format at the time of recording or at the time of programming the recording;
data transfer means and communication means for transferring the video data recorded by the recording format selecting means to the portable type reproducing device; and
transfer judging means which is a transfer flag for setting whether or not to transfer video data to the portable type reproducing device provided with video data reproducing means during recording,
wherein the recording and reproducing device sets a transfer start time and a transfer end time, compares an estimated transfer time calculated from the amount of data of the video data and transfer rate per a unit time with a programmed transfer time calculated from the transfer start time and the transfer end time and comprises warning means for reporting when the estimated transfer time exceeds the programmed transfer time.

2. The recording and reproducing device provided with a programmed transfer function according to claim 1, wherein the portable type reproducing device comprises feedback means capable of storing setting information on the recording and reproducing device and reflecting the setting information including a change thereof in the setting of the recording and reproducing device.
